# EUROPÄISCHE PATENTSCHRIFT

(11) **EP 0 744 413 B1**
(45) Veröffentlichungstag und Bekanntmachung des Hinweises auf die Patenterteilung: **08.12.1999**
(21) Anmeldenummer: 96107724.5
(22) Anmeldetag: 15.05.1996
(51) Int. Cl.: C08F 8/46, C08F 8/30, C08F 8/14, C10L 1/22, C10M 133/56

(54) **Herstellung von Polyalkenylbernsteinsäure-Derivaten und ihre Verwendung als Kraft- und Schmierstoffadditive**
Preparation of polyalkenyl succinic acid derivatives and the use thereof as lubricating oil and fuel additives
Préparation de dérivés de l'acide polyalkényl succinique et leur application comme additifs de combustibles ou de lubrifiants

(30) Priorität: 24.05.1995 DE 19519042
(43) Veröffentlichungstag der Anmeldung: 27.11.1996
(73) Patentinhaber: BASF AKTIENGESELLSCHAFT, 67056 Ludwigshafen (DE)
(72) Erfinder: Rath, Hans Peter, Dr., 67269 Grünstadt (DE); Mach, Helmut, Dr., 69115 Heidelberg (DE)

(56) Entgegenhaltungen:
- EP-A- 0 168 139
- EP-A- 0 264 247
- EP-A- 0 271 937
- EP-A- 0 584 590
- BE-A- 648 784
- DE-A- 2 166 407
- DE-B- 1 299 120
- GB-A- 1 141 943
- US-A- 3 779 963
- US-A- 3 953 655
- JOURNAL OF POLYMER SCIENCE: PART A-1 ; POLYMER CHEMISTRY, Bd. 5, Nr. 7, Juli 1967, Seiten 1539-1545, XP002025298 WLODZIMIERZ GABARA: "GRAFTING IN REACTION OF POLYETHYLENE AND POLY(MALEIC ANHYDRIDE)"

## Beschreibung

Die vorliegende Erfindung betrifft ein verbessertes Verfahren zur Herstellung von Polyalkenylbernsteinsäure-Derivaten aus Oligo- oder Polyolefinen und Maleinsäurederivaten sowie deren Verwendung als Kraft- und Schmierstoffadditive. Weiterhin betrifft die Erfindung Kraftstoffe für Ottomotoren und Schmierstoffe, welche diese Polyalkenylbernsteinsäure-Derivate enthalten, sowie aschefreie Dispergatoren, die Cokondensate auf Basis dieser Polyalkenylbernsteinsäure-Derivate darstellen.

Polyisobutenylbernsteinsäureimide finden als sogenannte aschefreie Dispergatoren breite Anwendung im Schmierstoffbereich. In Motorenölen für Otto- und Dieselmotoren sind sie bis zu 10 Gew.-% enthalten und sollen hier die Agglomeratbildung von Partikeln verhindern, die im allgemeinen als Schlammbildung bezeichnet wird. Die Dispergierwirkung, d.h. in diesem Fall die Hydrophobierung der Partikel, ist damit ihre wichtigste Eigenschaft. In Kraftstoffen werden solche Verbindungen zur Reinhaltung des Einlaßsystems, insbesondere der Einlaßventile, eingesetzt. In den letzten Jahren verstärkt sich der Ersatz des Polyisobutenrestes durch andere Oligoolefinreste. Die Anforderungen an diese Oligoolefinreste sind mit denen an den Polyisobutenrest vergleichbar.

Die entsprechenden Imide werden meist aus Polyaminen und Polyisobutenylbernsteinsäureanhydrid (PIBSA) durch Kondensation hergestellt. Die PIBSA-Herstellung hängt wesentlich von der Polyisobuten (PIB)-Qualität ab und erfolgt rein thermisch ("en-Reaktion") im allgemeinen bei Temperaturen zwischen 225 und 245°C mit Ausbeuten um die 65 %. Durch Zugabe von Halogenen kann man die Ausbeuten bis auf 90 % steigern. Durch Chloraddition und Dehydrohalogenierung oder Allylchlorierung kann man die Doppelbindung des PIB aktivieren und so die Reaktionstemperaturen auf ca. 170°C senken. Die Chlorzugabe führt jedoch in allen Fällen zu chlorhaltigen Verbindungen und deren Verbrennung im Motor meist zu toxischen Dioxinen in den Abgasen.

Die US-A 4 152 499 (1) lehrt, daß sich mit Zunahme des Vinylidenanteils im PIB, d.h. mit höherem Anteil an reaktiven endständigen Doppelbindungen, auch ohne Halogeneinsatz tiefere Temperaturen bis zu ca. 170°C bei der "en-Reaktion" realisieren lassen. Die Maleinierung von PIB wird gemäß den Beispielen jedoch bei 200°C mit einem einmolaren Maleinsäureanhydrid (MSA) -Überschuß durchgeführt, um die für die Vermarktung notwendigen Ausbeuten zu erreichen. Außerdem entstehen bei solcher Art Reaktionsführung Teer und Produkttrübungen, die Säure- und Verseifungszahl der Umsetzungsprodukte nach Entfernung von unumgesetztem MSA erhöhen und so hohe Ausbeuten vortäuschen.

Aus der US-A 5 137 980 (2) ist bekannt, daß Polyisobutene mit hohem Vinylidenanteil vorzugsweise bei Temperaturen von 220 bis 265°C mit einem MSA-Überschuß von 0,1 bis 0,9 mol und einem Druck von 4 bis 50 bar gute Ergebnisse mit niedrigerer Teerbildung liefern. Es werden jedoch keine Angaben über den PIB-Umsatz und den Bismaleinierungsanteil gemacht. In einigen Fällen werden die Umsetzungen in Gegenwart von Katalysatoren wie Aluminiumchlorid, welche sich nur schwer wieder abtrennen lassen, durchgeführt.

Aus der DE-A 43 19 672 (3) ist ein Verfahren zur Herstellung von Polyisobutylbernsteinsäureanhydriden aus Polyisobuten und Maleinsäureanhydrid bekannt, bei dem Polyisobuten mit einem Gehalt an endständigen Doppelbindungen von mindestens 50 % mit überschüssigem Maleinsäureanhydrid bei 140 bis 200°C umgesetzt wird. Die so hergestellten Polyisobutylbernsteinsäureanhydride können weiter mit aliphatischen Polyaminen zu den entsprechenden Bernsteinsäureamiden oder -imiden umgesetzt werden. Dieses Herstellverfahren für Polyisobutylbernsteinsäureanhydride, welches üblicherweise einen niedrigen Bismaleinierungsanteil liefert, weist jedoch auch Nachteile auf, insbesondere sind die Ausbeuten verbesserungsbedürftig.

Da für bestimmte technische Anwendungen PIBSA mit niedrigem Bismaleinierungsanteil erwünscht ist, war es Aufgabe der vorliegenden Erfindung, ein Verfahren zur Herstellung von Polyalkenylbernsteinsäure-Derivaten bereitzustellen, welche Produkte ohne oder mit nur geringem Bismaleinierungsanteil bei gleichzeitig hohen Umsätzen und guter Produktqualität liefert.

Demgemäß wurde ein Verfahren zur Herstellung von Polyalkenylbernsteinsäure-Derivaten durch Umsetzung von Oligo- oder Polyolefinen mit einem zahlengemittelten Molekulargewicht (M_{N}) von 500 bis 5000 mit Maleinsäurederivaten der allgemeinen Formel I 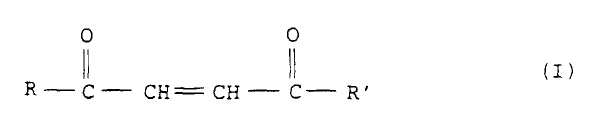 in der R und R' unabhängig voneinander für Hydroxyl, Niederalkyl oder Halogenatome oder zusammen für ein Sauerstoffatom stehen, bei höheren Temperaturen von 140°C bis 250°C gefunden, welches durch die Anwesenheit wirksamer Mengen von Radikalfängern in der Gasphase und in der Flüssigphase des reagierenden Systems während der Umsetzung gekennzeichnet ist.

Als Radikalfänger werden Sauerstoff oder Sauerstoff enthaltende Gase, beispielsweise Luft oder sonstige technische Mischungen aus Sauerstoff und Stickstoff eingesetzt. Auch Mischungen von Sauerstoff mit anderen inerten Gasen, z.B. Sauerstoff-Argon-Mischungen, können verwendet werden.

In einer bevorzugten Ausführungsform behandelt man die Oligo- oder Polyolefine vor Umsetzungsbeginn mit Sauerstoff oder Sauerstoff enthaltenden Gasen. So kann man beispielsweise Luft für eine längere Zeit, z.B. eine Stunde, durch das Olefin, gegebenenfalls im Vakuum, leiten, wobei gleichzeitig Restmengen von Wasser und niedrigsiedenden Olefinkomponenten entfernt ("gestrippt") werden. Man kann auch reines Inertgas, z.B. Stickstoff, unter den gleichen Bedingungen durch das Olefin leiten, wobei man anschließend für eine definierte Zugabe von Sauerstoff oder Sauerstoff enthaltenden Gasen sorgen muß. Dieses Durchleiten von Luft oder Inertgas durch das Olefin geschieht zweckmäßigerweise bei höheren Temperaturen, vorzugsweise bei 100 bis 250°C, insbesondere bei 140 bis 230°C, vor allem bei 160 bis 200°C,

Eine genaue Festlegung der Luft- bzw. Sauerstoffmengen, welche erfindungsgemäß notwendig sind oder welche einen optimalen Bereich darstellen, ist nur schwer möglich und richtet sich eher nach den Explosionsgrenzen der Sauerstoff-Olefin-Gemische und der Qualität der Mischorgane. Erfindungsgemäß erreicht man mit einem Luft- bzw. Sauerstoffstrom, der 1 mg bis 30 mg, insbesondere 2 mg bis 20 mg O₂ pro Minute und pro Doppelbindungsäquivalent im eingesetzten Olefin enthält und 5 bis 200 min, insbesondere 15 bis 60 min durchgeleitet wird, gute Resultate.

Folgende technische Durchführung der Sauerstoffbehandlung hat sich in vielen Fällen als empfehlenswert erwiesen: nach dem Strippen mit Inertgas, z.B. Stickstoff, wird die Reaktionsapparatur unter 0,1 bis 10 bar Luft gestellt, so daß 5 bis 500 ppm Sauerstoff, insbesondere 20 bis 200 ppm Sauerstoff, bei der Maleinierung anwesend sind. Man kann diese Technik auch mit dem direkten Durchleiten von Sauerstoff kombinieren.

Während des Durchleitens oder durch das "Aufdrücken" des Sauerstoffs wird dieser zu einem bestimmten Anteil vom Olefin adsorbiert und kann so seine radikalabfangende Wirkung direkt an der Doppelbindung ausüben. Während der Umsetzung des Olefins mit dem Maleinsäurederivat I stellt sich ein Gleichgewicht des Sauerstoffs zwischen Gasphase und Flüssigphase ein, so daß dieser in beiden Phasen im Sinne der Erfindung wirken kann.

In einer bevorzugten Ausführungsform setzt man als Oligo- oder Polyolefine Oligo- bzw. Polymerisate von C₃- bis C₁₂-Olefinen oder Copolymerisate von C₃- bis C₁₂-Olefinen untereinander oder mit Ethylen ein.

Für die Herstellung der Polyalkenylbernsteinsäure-Derivate benötigt man Oligo. oder Polyolefine zahlengemittelten Molekulargewichtsbereiches (M_{N}) 500 bis 5000, vorzugsweise 800 bis 5000. Polyisobutene dieses Molekulargewichtsbereiches werden beispielsweise gemäß der US-A 5 137 980, EP-A 145 235, US-A 5 068 490 oder gemäß (1) hergestellt. Oligopropene lassen sich vorzugsweise via Metallocenkatalyse erhalten und sind z.B. in der EP-A 490 454 beschrieben. Auch Oligoolefine der Butene, Pentene, Hexene und Decene sowie Copolymere von Olefinmischungen, die auch bis zu 70 mol-% Ethylen enthalten können, sind von besonderem Interesse. Besonders bevorzugt sind auch die Homo- und Copolymeren der 1-Olefine via Metallocenkatalyse.

Bevorzugt werden Oligo- oder Polyolefine mit hohen Gehalten an endständigen Vinyl- oder Vinylidendoppelbindungen, d.h. solche, die mehr als 50 %, vorzugsweise mehr als 70 % endständige Doppelbindungen aufweisen. Die Dispersizität D (M_{W}/M_{N}) der verwendeten Polymerisate liegt meist zwischen 1,3 und 3, enge Verteilungen sind bevorzugt. So sind z.B. Polyisobutene mit Verteilungen unter 2,0 für >M_{N} 2000 und unter 1,5 für <M_{N} 1000 besonders vorteilhaft. Das Polyolefin sollte frei von organischen und anorganischen Basen, Wasser, Alkoholen, Ethern, Säure und Peroxiden sein.

Als Maleinsäurederivate I kommen beispielsweise Maleinsäure selbst, entsprechende Maleinsäuremonoalkylester sowie Maleinsäuredialkylester, Maleinsäuredichlorid, Maleinsäuredibromid oder Maleinsäuremonoalkylestermonochlorid oder -monobromid in Betracht. Unter Niederalkyl ist vor allem C₁- bis C₄-Alkyl zu verstehen, insbesondere Methyl oder Ethyl.

In einer bevorzugten Ausführungsform stellt man Polyalkenylbernsteinsäureanhydride aus Oligo- oder Polyolefinen und Maleinsäureanhydrid (MSA) nach dem erfindungsgemäßen Verfahren her.

Neben einer hohen Reinheit des Maleinsäurederivates I (z.B. MSA) als Reaktionspartner ist vor allem dessen Säuregehalt von Bedeutung und sollte so niedrig wie möglich liegen. Eine Flüssigdosierung der Komponente I mit Zulauf während der Reaktion ist vorteilhaft.

Das optimale molare Verhältnis von Komponente I (z.B. MSA) zum Olefin liegt bei 1:1 bis 5:1, insbesondere bei 1,1:1 bis 3:1. Molare Überschüsse steigern die Umsätze an Olefin nicht, wenn Radikalreaktionen ausgeschlossen werden, und führen darüber hinaus noch zu einem unerwünschten hohen Bismaleinierungsanteil und zu Problemen bei der Reaktionsführung (insbesondere zu Druckanstieg im Reaktionsbehälter).

Die erfindungsgemäße Umsetzung der Olefine mit den Maleinsäurederivaten I wird in einem Autoklaven bei Temperaturen von 140 bis 250°C, vorzugsweise 170 bis 240°C durchgeführt.

Als Lösungsmittel sind für die erfindungsgemäße Umsetzung sind Aromaten wie Benzol, Toluol, Xylole und andere Alkylbenzole, aber auch Ether wie Tetrahydrofuran (THF), 1,4-Dioxan, Glycol- und Oligoglycolether, Propandiol, Butandiol-, Oligopropandiol-, Oligobutandiol- und Mischethern geeignet. Besonders geeignet zur Abtreibung freier MSA-Mengen sind Dimethyldiglycol und Diethyldiglycol. Bei allen Lösungsmitteln ist jedoch Vorsicht hinsichtlich des Peroxidgehaltes geboten. Dies gilt insbesondere für Ether, da ein Radikalstart durch Etherperoxide eine wunschgemäße Reaktionsführung verhindert. Besonders günstig sind daher Zusätze kleinerer Mengen aliphatischer Lösungsmittel, die sublimierendes MSA zum Reaktionsgemisch zurückführen. Eine Mischung von hoch- und niedersiedenden Lösungsmitteln kann dann von Vorteil sein, wenn man der Sublimation bei der Reaktion und Aufarbeitung entgegen wirken und restliches MSA nach der Reaktion möglichst quantitativ austreiben will.

Optimale Produktqualität bei der bevorzugten Umsetzung von PIB mit MSA erzielt man, wenn die MSA-Konzentration die MSA-Löslichkeit nicht überschreitet. Die Löslichkeit ist abhängig von der Reaktionstemperatur, dem Lösungsmittel, der Lösungsmittelkonzentration, dem Molekulargewicht des PIB, seiner Dispersizität D und dem PIB-Umsatz. Die Produktqualität steigt mit zunehmendem PIB-Umsatz. Aus diesem Grund ist ein MSA-Zulauf vorteilhaft, der zunehmender MSA-Löslichkeit und der Reaktionsgeschwindigkeit angepaßt ist. Die optimale Zulaufdauer für äquimolare MSA-Mengen liegt unter 15 Minuten, die Zulaufzeit für einen 2molaren MSA-überschuß (bei M_{N} 2400 und 200°C) bei 3 Stunden. Die Reaktionszeit liegt vorzugsweise zwischen 2 und 8 Stunden.

Das eingesetzte PIB wird durch Viskosität, Flammpunkt, Bromzahl und Gelpermeationschromatographie (GPC) charakterisiert. Für die GPC werden PIB-Standards mit enger Verteilung (D unter 1,05) im Bereich von M_{N} = 112 bis 1000000 verwendet, zur Trennung werden zwei gepackte Säulen a 300 mm Länge mit einem Durchmesser von 7,8 mm verwendet. Die Packung besteht aus Ultrastyragel mit Porengrößen 10³ und 10⁵ Å, die Korngröße liegt bei 5 µm, Als Elutions- und Lösungsmittel dient THF, die Flußmenge beträgt 1 ml pro Minute.

Das so erhaltene PIB-MSA-Rohprodukt wird beispielsweise durch Destillation im Vakuum von Lösungsmitteln und MSA befreit, so daß die MSA-Konzentration unter 0,1 Gew.-% fällt. MSA-Sublimation wird bei geeigneten Lösungsmitteln und Lösungsmittelkonzentrationen auch beim Abdestillieren in Glasgefäßen nicht beobachtet. Die PIBSA-Farbe wird bei dieser Verfahrensweise im Glaskolben allerdings signifikant in Richtung dunklerer Farbe verschlechtert. Der Destillationsrückstand (PIBSA) ist meist bernsteinfarben, wasserklar, frei von Teer und bis M_{N} = 1500 ohne jede Trübung. Die Farbintensität nimmt mit zunehmendem Umsatz und zunehmender Funktionalisierung zu. Ablagerungen an Wandungen, Deckel und Rührer sind gering.

Die nach dem erfindungsgemäßen Verfahren hergestellten Polyalkenylbernsteinsäure-Derivate können nach den üblichen Methoden imidiert, amidiert oder verestert werden und eignen sich in dieser Form in hervorragender Weise als Kraft- und Schmierstoffadditive. Die Imidierung oder Amidierung erfolgt beispielsweise durch Umsetzung mit Mono- oder Polyaminen hierfür üblicher Struktur, die Veresterung beispielsweise durch zwei- oder mehrwertige aliphatische Alkohole oder Hydroxyphenolen hierfür üblicher Struktur. Beispiele für derartige Imidierungen, Amidierungen und Veresterungen finden sich in (2).

Werden die erfindungsgemäß hergestellten Polyalkenylbernsteinsäure-Derivate in Kraftstoffen für Ottomotoren eingesetzt, so gibt man sie in einer Menge von 10 bis 1000 ppm, insbesondere 50 bis 500 ppm, zu. In Schmierstoffen muß höher additiviert werden, die Mengen betragen hier 0,1 bis 10 Gew.-%, insbesondere 0,5 bis 6 Gew.-%.

Sollen die dispergierenden Eigenschaften der Polyalkenylbernsteinsäure-Derivate in den Otto-Kraftstoffen verstärkt genutzt werden, so kann man sie mit herkömmlichen Detergentien als zusätzlichen Additiven kombinieren.

Als Detergents-Komponente solch einer Mischung kann prinzipiell jedes bekannte hierfür geeignete Produkt eingesetzt werden. Solche Produkte sind z.B. bei J. Falbe, U. Hasserodt, Katalysatoren, Tenside und Minerelöladditive, G. Thieme Verlag Stuttgart, 1978, S. 223 f., oder bei K. Owen, Gasoline und Diesel Fuel Additives, John Wiley & Sons, 1989, S. 23 ff., beschrieben.

Vorzugsweise verwendet man N-haltige Detergentien, z.B. Verbindungen, die Amin- oder Amid-Gruppen enthalten. Insbesondere geeignet sind Polyisobutylamine gemäß EP-A 244 616 und Ethylendiamintetraessigsäureamide und/oder -imide gemäß EP-A 356 725, wobei auf die Definition in diesen Literaturstellen Bezug genommen wird. Die dort beschriebenen Produkte verfügen herstellungsbedingt ebenfalls über den Vorteil, chlor- bzw. chloridfrei zu sein.

Als Kraftstoffe für Ottomotoren kommen verbleites und insbesondere unverbleites Normal- und Superbenzin in Betracht. Die Benzine können auch andere Komponenten als Kohlenwasserstoffe, z.B. Alkohole wie Methanol, Ethanol oder tert.-Butanol sowie Ether, z.B. Methyl-tert.-butylether, enthalten. Neben den erfindungsgemäß hergestellten Umsetzungsprodukten enthalten die Kraftstoffe in der Regel noch weitere Zusätze wie Korrosionsinhibitoren, Stabilisatoren, Antioxidantien und/oder weitere Detergentien.

Korrosionsinhibitoren sind meist Ammoniumsalze organischer Carbonsäuren, die durch entsprechende Struktur der Ausgangsverbindungen zur Filmbildung neigen. Auch Amine zur Absenkung des pH-Wertes finden sich häufig in Korrosionsinhibitoren. Als Buntmetallkorrosionsschutz werden meist heterocyclische Aromaten eingesetzt.

Gegenstand der vorliegenden Erfindung sind auch Kraftstoffe für Ottomotoren und Schmierstoffe, welche die erfindungsgemäß hergestellten Polyalkenylbernsteinsäure-Derivate nach zusätzlicher Imidierung, Amidierung oder Veresterung in den jeweils angegebenen Mengen enthalten.

Die Umsetzungsprodukte der erfindungsgemäß hergestellten Polyalkenylbernsteinsäure-Derivate zu Amiden oder Imiden sind als Schmierstoffadditive besonders geeignet, wenn das dem Alkylrest zugrunde liegende Oligo- oder Polyolefin ein mittleres Molgewicht (MN) von 500 bis 5000, hat und die Zahl der Stickstoffatome des Polyamins 3 bis 20 beträgt. Als entsprechende Kraftstoffadditive liegt das bevorzugte mittlere Molgewicht des zugrunde liegenden Olefins bei 500 bis 2000, die bevorzugte Zahl der Stickstoffatome des Polyamins zwischen 2 und 5.

Eine unerwartete Steigerung in der Dispersantwirkung bei Kraft- und Schmierstoff additiven erhält man, wenn man eine Cokondensation der
(i) erfindungsgemäß hergestellten Polyalkenylbernsteinsäure-Derivate mit
(ii) Polycarbonsäuren oder Polycarbonsäureanhydriden oder Borsäure und
(iii) Polyaminen
durchführt, wobei die Mengen der Komponenten (ii) und (iii) so gewählt werden, daß mindestens 5 mol-%, vorzugsweise mindestens 10 mol-%, insbesondere mindestens 30 mol-%, vor allem mindestens 70 mol-% der Polyalkenylbernsteinsäure-Derivate als Imid- oder Amidstrukturen mit (ii) und (iii) vorliegen.

Die so erhältlichen aschefreien Dispergatoren aus (i), (ii) und (iii) zeigen in Kraft- und Schmierstoffen hervorragende Anwendungseigenschaften.

Daher sind auch Gegenstand der vorliegenden Erfindung aschefreie Dispergatoren, welche durch Cokondensation von
(i) Polyalkenylbernsteinsäure-Derivaten aus Oligo- oder Polyolefinen mit einem zahlengemittelten Molekulargewicht (M_{N}) von 500 bis 5000 und Maleinsäurederivaten der allgemeinen Formel I 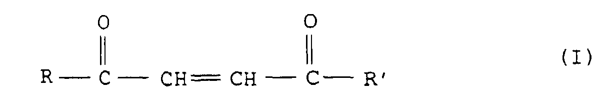 in der R und R' unabhängig voneinander für Hydroxyl, Niederalkyl oder Halogenatome oder zusammen für ein Sauerstoffatom stehen, mit
(ii) Polycarbonsäuren oder Polycarbonsäureanhydriden aus der Gruppe niedermolekulare Di-, Tri- und Tetracarbonsäuren aliphatischer oder aromatischer Struktur, welche zusätzlich funktionelle Gruppen tragen können, und polymere Carbonsäuren mit Ausnahme von Copolymerisaten von Maleinsäure oder Maleinsäurederivaten mit Olefinen sowie die zugehörigen Anhydride und
(iii) Polyaminen,
erhältlich sind, wobei die Mengen der Komponenten (ii) und (iii) so gewählt werden, daß mindestens 5 mol-% der Polyalkenylbernsteinsäure-Derivate als Imid- oder Amidstrukturen mit (ii) und (iii) vorliegen.

Aschefreie Dispergatoren für Schmierstoffe, welche durch Cokondensation der genannten Polyalkenylbernsteinsäure-Derivate (i) mit Copolymerisaten von Maleinsäureanhydrid-Derivaten wie MSA mit Olefinen wie Diisobuten und Polyaminen erhältlich sind, sind bereits bekannt, beispielsweise aus der EP-A 365 288 (4) oder der US-A 3 455 827 (5).

Als Komponente (ii) kommen sowohl niedermolekulare Di-, Tri- oder Tetracarbonsäuren aliphatischer oder aromatischer Struktur, welche zusätzliche funktionelle Gruppen wie Hydroxylgruppen, Aminogruppen oder Carbonylfunktion tragen können, als auch polymere Carbonsäuren sowie die zugehörigen Anhydride in Betracht. Typische Beispiele für (ii) sind Trimellithsäure, Trimellithsäureanhydrid, Pyrromellithsäure, Pyrromellithsäureanhydrid, Citronensäure, Ethylendiamintetraessigsäure, Nitrilotrispropionsäure, Acryl- oder Methacrylsäure-Homopolymerisate und Copolymerisate von Acryl- oder Methacrylsäure mit Maleinsäure oder Maleinsäurederivaten.

Als Komponente (iii) eignen sich beispielsweise Diethylentriamin, Triethylentetramin, Tetraethylenpentamin oder Pentaethylenhexamin. Wesentlich ist, daß diese Polyamine mindestens zwei zur Verknüpfung mit (i) und (ii) befähigte Aminogruppen aufweisen.

Die Polysäuren (ii) werden über die Polyamine (iii) an den Polyalkenylbernsteinsäure-Derivaten (i) durch Kondensation verankert. Dabei kann die Kondensation gemeinsam direkt oder nach Vorkondensation der einen oder anderen Komponente erfolgen. Die Verankerung der Polysäuren (ii) an (i) ist jedoch essentiell und wird durch die Stöchiometrie, die Aminwahl und die Reaktionsbedingungen sichergestellt.

Gegenstand der vorliegenden Erfindung sind weiterhin Kammpolymere, welche erhältlich sind durch Cokondensation von
(α) Polyalkenylbernsteinsäure-Derivaten aus Oligo- oder Polyolefinen mit einem zahlengemittelten Molekulargewicht (M_{N}) von 500 bis 5000 und Maleinsäure-Derivaten der allgemeinen Formel I 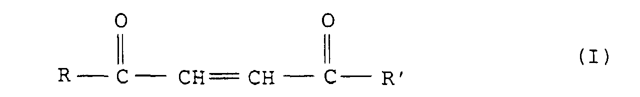 in der R und R' unabhängig voneinander für Hydroxyl, Niederalkyl oder Halogenatome oder zusammen für ein Sauerstoffatom stehen, hergestellt durch Umsetzung der Oligo- oder Polyolefine mit den Maleinsäure-Derivaten in Anwesenheit wirksamer Mengen von Radikalfängern in der Gasphase und in der Flüssigphase des reagierenden Systems während der Umsetzung, mit
(β) Polycarbonsäuren oder Polycarbonsäureanhydriden auf Basis von Copolymerisaten von Maleinsäure oder Maleinsäurederivaten mit Olefinen und
(γ) Polyaminen,
wobei die Mengen der Komponenten (β) und (γ) so gewählt werden, daß mindestens 5 mol-% der Polyalkenylbernsteinsäure-Derivate als Imid- oder Amidstrukturen mit (β) und (γ) vorliegen.

Die erfindungsgemäßen Kammpolymere werden zweckmäßigerweise durch Cokondensation der genannten Komponenten (α), (β) und (γ) nach üblichen Methoden hergestellt. Die Kondensationstemperatur liegt dabei im Bereich von 120 bis 200°C.

Die Komponente (α) wird, wie vorne beschrieben, in Gegenwart von Radikalfängern, insbesondere von Sauerstoff oder Sauerstoff enthaltenden Gasen, hergestellt.

Die Komponente (β) umfaßt insbesondere Maleinsäureanhydrid-α-Olefin-Copolymerisate. Als (α)-Olefine eignen sich beispielsweise C₃- bis C₃₀-α-Olefine, insbesondere lineare (unverzweigte) und geringfügig verzweigte C₆- bis C₂₀-α-Olefine, z.B. Propen, 1-Buten, Isobuten, 1-Hexen,1-Octen, Diisobuten, 1-Decen, 1-Dodecen, 1-Tetradecen, 1-Hexadecen, 1-Octadecen und 1-Eicosen, sowie Oligomere solcher Olefine, z.B. 1-Decenoligomere. Von besonderem Interesse sind Diisobuten und 1-Decenoligomere. Geeignete derartige Copolymerisate haben in der Regel mittlere Molekulargewichte von 200 bis 30000, insbesondere 500 bis 10000, vor allem 800 bis 5000. Bei Verwendungen von MSA-1-Decenoligomer-Copolymerisaten sind Molekulargewichte von 3000 bis 30000 besonders günstig. Als Komponente (β) im Sinne der vorliegenden Erfindung eignen sich auch Polymerisate, welche die genannten Copolymerisate von Maleinsäure oder Maleinsäurederivaten mit Olefinen, insbesondere Maleinsäureanhydrid-α-Olefin-Copolymerisate, in wesentlichen Mengen, d.h. wenigstens zu 20 Mol-%, insbesondere wenigstens zu 50 Mol-%, einpolymerisiert enthalten und daneben auch andere Monomerkomponenten aufweisen. Die Polymerisate der Komponente (β) können nach üblichen Polymerisationsmethoden hergestellt werden.

Die Komponente (γ) entspricht im wesentlichen der Komponente (iii).

Wie bei den Cokondensaten aus den Polyalkenylbernsteinsäure-Derivaten (i), den Polysäuren (ii) und den Polyaminen (iii) werden bei den erfindungsgemäßen Kammpolymeren die Polysäuren (β) über die Polyamine (γ) an den Polyalkenylbernsteinsäure-Derivaten (α) durch Kondensation verankert. Dabei kann die Kondensation gemeinsam direkt oder nach Vorkondensation der einen oder anderen Komponente erfolgen. Die Verankerung der Polysäuren (β) an (α) ist jedoch essentiell und wird durch die Stöchiometrie, die Aminwahl und die Reaktionsbedingungen sichergestellt.

Vorzugsweise werden die drei Komponenten (α), (β) und (γ) im molaren Verhältnis von ungefähr 1:1:1 eingesetzt, d.h. daß im wesentlichen jede Maleinsäureeinheit von (β) (dem "backbone" des Polymerkamms) eine "Zinke" aus einem Polyamin (γ), an dessen anderem Ende eine Polyalkenylbernsteinsäure-Einheit (α) sitzt, via Amid- oder Imidbindung trägt. Es ist jedoch nicht unbedingt erforderlich, daß alle Zinken Polyalkenylbernsteinsäure-Einheiten (α) tragen, einige Zinken in den erfindungsgemäßen Kammpolymeren können auch nur aus Polyaminen (γ) bestehen; die erfindungsgemäßen Kammpolymere sollten zweckmäßigerweise jedoch mindestens zu 20 %, insbesondere mindestens zu 50 % mit Polyalkenylbernsteinsäure-Einheiten (α) versehene Zinken aufweisen.

Von besonderem Interesse unter den erfindungsgemäßen Kammpolymeren sind auch noch solche, bei denen die Maleinsäureeinheiten von (β) neben über Amid- oder Imidbindungen angeknüpfte "Zinken" teilweise Estergruppierungen tragen.

Die erfindungsgemäßen Kammpolymere eignen sich in hervorragender Weise als aschefreie Dispergatoren, insbesondere in Kraft- und Schmierstoffen, worin sie in den oben genannten Mengen eingesetzt werden können.

Die erfindungsgemäßen aschefreien Dispergatoren aus (i), (ii) und (iii) sowie die erfindungsgemäßen Kammpolymeren aus (α), (β) und (γ) können im Tüpfeltest, der von A. Schilling in "Les Huiles pour Moteurs et le Graissage des Moteurs", Band 1, 1962, Seiten 89-90, beschrieben ist, geprüft werden. Zur Versuchsdurchführung werden 60 gew.-%ige Wirksubstanzen durch Zusatz von Mineralöl SN 100 hergestellt. Die 60 gew.-%igen Wirksubstanzen werden Rußdispersionen mit 3 Gew.-% zugesetzt und das Rating wird gemessen.

Charakterisierung der erfindungsgemäß hergestellten Polyalkenylbernsteinsäure-Derivate

Das Umsetzungsprodukt ist im Falle der Umsetzung von PIB mit MSA durch MSA-Gehalt, Extrakt, Verseifungszahl und PIB-Umsatz charakterisierbar.

Der MSA-Gehalt des Fertigproduktes ist für die spätere Umsetzung und die Wirksamkeit von großer Bedeutung. Der Gehalt an freiem MSA wird im allgemeinen durch Wasserextraktion bestimmt, wobei auch Polysäuren und entsprechende Anhydride erfaßt werden. Um diesen Fehler zu korrigieren, wird freies MSA wie folgt bestimmt: Aus der PIBSA-Probe von 200 g, mit 20 g Solvent Naphtha versetzt, wird das Lösungsmittel bei 180°C und 30 mbar abdestilliert und die Säurezahl des Destillats titriert. Der Vorgang wird so lange wiederholt, bis die Säurezahl des Destillats unter 5 liegt. Aus den Destillatmengen und der zugehörigen Säurezahl wird dann die freie MSA-Menge berechnet, in denen sich meist wenig MSA, dafür aber andere flüchtige Säuren und Säureanhydride befinden.

Die nichtflüchtigen Polysäuren oder Polyanhydride werden durch Extraktion einer Probe mit Essigsäureanhydrid (ESA) bestimmt. Dazu werden 20 g Umsetzungsprodukt in 20 g Heptan gelöst und mit 28 g ESA extrahiert. Nach kräftigem Schütteln erfolgt Phasentrennung über Nacht, die Phasen werden getrennt und destillativ wie der Reaktionsaustrag aufgearbeitet. Die Verseifungszahl vor und nach der Raffination erlaubt die Berechnung der Polysäuren und Polyanhydride.

Zur Bestimmung der Verseifungszahl werden 1,0 g Produkt in 25 ml einer 0,5 normalen KOH mit Lösungsmittel Ethanol/Toluol 1:1 zehn Minuten unter Rückfluß erhitzt, die Heizplatte wird entfernt, der Rückflußkühler mit 20 ml Methanol gespült und nach dem Erkalten mit wäßriger HCl zurücktitriert.

Der Wirksubstanzgehalt wird mit gängigen Methoden durch HPLC bestimmt, die Doppelbindungen der eingesetzten Oligoolefine durch ¹H-NMR. Hierbei wird das Verhältnis von aliphatischen zu olefinischen Protonen und Vinylidenprotonen bestimmt.

Wirksubstanzgehalt, Molekulargewicht (M_{N}), Extrakt und Verseifungszahl des Raffinats erlauben eine genaue Berechnung des Bismaleinnierungsanteils, der beim erfindungsgemäßen Verfahren deutlich unter 10 % liegt.

### Herstellungsbeispiele

### Beispiel 1

In einem 1,4-1-Rührautoklaven aus Edelstahl (V4A) mit Scheibenrührer (800 Upm) wurden 500 g Polyisobuten (MN 2315, 78 % Vinylidendoppelbindungsgehalt) vorgelegt, auf 180°C erhitzt und unter intensivem Rühren (500 Upm) ein Vakuum von 30 mbar angelegt. Dieses Vakuum wurde durch Einleitung von Stickstoff am Boden des Autoklaven auf 100 mbar eingestellt. Unter diesen Bedingungen wurde dann eine Stunde gestrippt, wobei neben Wasser auch kleinere Oligomermengen übergingen. Danach wurde belüftet und 30 min Luft (40 ml/min ≙ 9 mg O₂/min) durchgeblasen, der Autoklav geschlossen und auf 225°C aufgeheizt. Dann wurden 21,2 g MSA innerhalb von 5 min zudosiert, weitere 32,3 g MSA nach 25 min. Nach insgesamt 4 h Reaktionszeit wurde die Heizung abgeschaltet und unumgesetztes MSA unter Vakuum (30 mbar) abdestilliert, dann mit 50 ml Cyclohexan gestrippt und der Reaktoraustrag analysiert.

Das so erhaltene PIBSA hatte einen Gehalt an freiem MSA von 0,08 Gew.-%, einen Extrakt von 0,2 Gew.-% und eine Verseifungszahl des Raffinats von 43, eine Verseifungszahl des Rohproduktes von 44, einen Wirksubstanzgehalt von 85 % und eine relative Bismaleinierung von 5 %. Das ESA-Raffinat war eine klare braune Flüssigkeit, das Rohprodukt leicht trüb und bernsteinfarben.

### Beispiel 2

100 g des Bernsteinsäureanhydrids gemäß Beispiel 1 wurden mit 10 g eines Diisobuten-MSA-Copolymeren mit Molgewicht (M_{N}) 400 gemischt und bei 180°C mit 20 g Pentaethylenhexamin kondensiert. Dazu wurde 4 h mit 20 1/h Stickstoff gestrippt. Das Kondensationsprodukt hatte danach eine Säurezahl von 0,8 und wurde im Tüpfeltest mit marktüblichen, aschefreien Dispergatoren verglichen. Man erhielt ein Rating von 700, der Standard Oloa® 4373 (handelsübliches Umsetzungsprodukt aus PIBSA und Pentaethylenhexamin) lieferte 620.

### Beispiel 3

100 g des Bernsteinsäureanhydrids gemäß Beispiel 1 wurden mit 8 g Ethylendiamintetraessigsäure versetzt und bei 180°C mit 20 g Pentaethylenhexamin wie in Beispiel 2 kondensiert. Die Säurezahl nach Kondensation lag bei 0,5. Das Rating im Tüpfeltest war mit 690 völlig vergleichbar.

### Beispiele 4 bis 8

Diese Beispiele wurden in Analogie zu Beispiel 1 durchgeführt, jedoch wurde nach dem Strippen mit Stickstoff belüftet bzw. Luft aufgepreßt, um unterschiedliche Sauerstoffgehalte in Gas- und Flüssigphase einzustellen. Die Randbedingungen und Ergebnisse sind in der nachfolgenden Tabelle zusammengefaßt.

| Beispiel Nr. | Molverh. MSA:PIB | O₂/PIB [ppm] | Wirksubstanzgehalt [%] | Bismaleinierung [%] |
|---|---|---|---|---|
| 4 | 1,2:1 | 35 | 79 | 8 |
| 5 | 1,2:1 | 70 | 81 | 3 |
| 6 | 2:1 | 70 | 80 | 6 |
| 7 | 2:1 | 175 | 78 | 2 |
| 8 | 3:1 | 175 | 79 | 10 |

### Beispiel 9 bis 11

Diese Beispiele beinhalten einen direkten Vergleich der Maleinierung bei tieferen Temperaturen gemäß (3) mit der erfindungsgemäßen Maleinierung in Gegenwart von Luft als Radikalfänger.

Beide Verfahren führen zu ähnlichen Produkten, Vorteil der Luftvariante ist jedoch die deutlich höhere Funktionalisierungsausbeute bei deutlich kürzeren Reaktionszeiten, bedingt durch höhere Maleinierungstemperaturen ohne Bismaleinierung. Aus diesem Grund bringt die Luftvariante vor allem wirtschaftliche Vorteile in Form erhöhter Anlagenkapazität.

Beispiel 9 und 10 aus (3) zeigen, daß trotz brillianter Inertisierung durch Lösemittel nur bei Temperaturen unter 200°C eine sichere Monomaleinierung zu Lasten der Ausbeuten möglich ist. Durch Gegenwart von Luftsauerstoff im Sinne der vorliegenden Erfindung können die Temperatur auf 225°C ohne nennenswerte Bismaleinierung erhöht und bei gleicher Reaktionszeit und niedrigerer MSA-Konzentration 89 % PIB-Umsatz (siehe Beispiel 11) erhalten werden.

| Beispiele | | molarer MSA-Überschuß [mol] | Temperatur [°C] | relative Bismaleinierung [%] | PIB-Umsatz [%] | Reaktionszeit [h] |
|---|---|---|---|---|---|---|
| 9 | Beispiel 5 aus (3) zum Vergleich | 0,55 | 195 | 3 | 83 | 2+6 |
| 10 | Vergleichsbeispiel analog zu (3) | 0,55 | 225 | 31 | 86 | 0,5+3 |
| 11 | erfindungsgemäßes Beispiel | 0,20 | 225 | 5 | 89 | 0,5+3 |

Beispiel 11 wurde in Analogie zu Beispiel 10, dem zu (3) analogen Vergleichsbeispiel, durchgeführt. Einziger Unterschied war hierbei eine halbstündige Begasung des PIB (M_{N} 1000) mit Luft vor der Inertisierung mit hochsiedenden Aromaten des Siedebereichs 150 bis 180°C gemäß Beispiel 1 (s. oben), Als Reaktor wurde ein 5-1-Rührkessel aus V2A-Stahl mit Tellerrührer verwendet.

### Beispiel 12 (Herstellung eines Kammpolymeren)

Das PIBSA enthaltende Produkt aus Beispiel 11 (s. oben) wurde im Molverhältnis 1:1,1 mit Triethylentetramin bei 180°C umgesetzt, d.h. ein Mol Triethylentetramin pro Mol Bernsteinsäureanhydrid. Nach 15 Minuten wurde Ölpumpenvakuum angelegt und Restmengen an freiem Triethylentetramin durch hochsiedende Aromaten des Siedebereichs 150 bis 180°C abgetrieben.

Dann wurde eine 50 gew.-%ige Lösung in besagtem Aromaten hergestellt und mit dem Anhydridäquivalent eines MSA-Diisobuten-Copolymeren aus einer Bulkpolymerisation mit M_{N} 800 und einer Verseifungszahl von 450 kondensiert. Auf diese Weise entstand ein Polymerkamm, dessen PIB-Zinken über Bissuccinimide des Triethylentetramin fixiert sind:

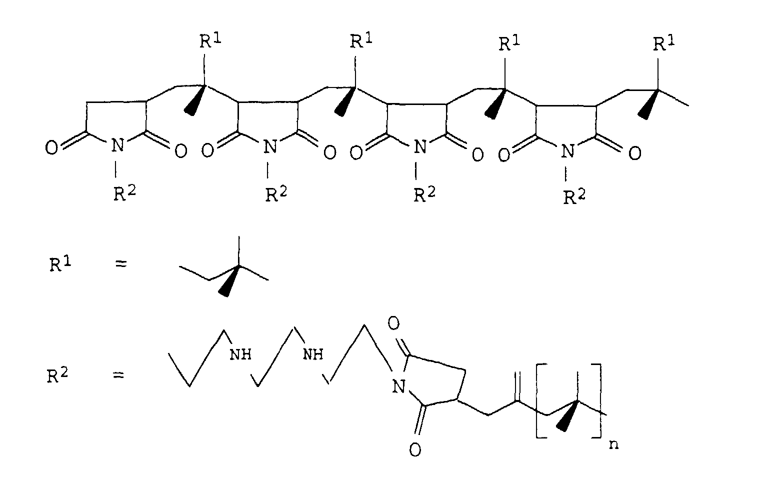

Dieses Polyimid hatte eine Säurezahl von kleiner 1. In einem anschließenden Tüpfeltest (s. oben) wurde dann die Dispergierwirkung geprüft.

Der Rußdispersion wurde 3 Gew.-% Wirksubstanz zugesetzt und das Rating gemessen. Man erhielt einen Wert bei Raumtemperatur von 680 und bei 250°C von 660.

Die Viskosität eines SAE API 10W-30 Motorenöles, enthaltend 6 Gew.-% der beschriebenen Wirksubstanz aber keinen VI-Verbesserer, ergab eine Viskosität bei 100°C von 11,2 mm²/s und einen Tieftemperatur-Wert im Cold Cranking Simulator (CCS) bei -20°C von 3050 mPa·s.

Das Vergleichsbeispiel 9 (s. oben) wurde analog zu Beispiel 12 mit PIBSA aus Beispiel 11 umgesetzt und führte zu einer Wirksubstanz mit einem Rating in der Rußdispersion (3 gew.-%ig) von 610 bei Raumtemperatur und 605 bei 250°C, sowie im SAE API 10W-30 Motorenöl bei 100°C zu einer Viskosität von 9,9 mm²/s und einem CCS-Wert bei -20°C von 3100 mPa·s.

## Patentansprüche

1. Verfahren zur Herstellung von Polyalkenylbernsteinsäure-Derivaten durch Umsetzung von Oligo- oder Polyolefinen mit einem zahlengemittelten Molekulargewicht (M_{N}) von 500 bis 5000 mit Maleinsäurederivaten der allgemeinen Formel I 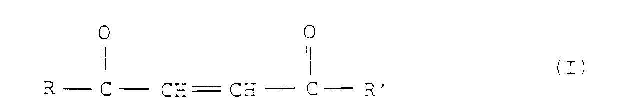 in der R und R' unabhängig voneinander für Hydroxyl, C₁- bis C₄- Alkyl oder Halogenatome oder zusammen für ein Säuerstoffatom stehen, bei Temperaturen von 140 bis 250°C, gekennzeichnet durch die Anwesenheit von Sauerstoff oder Sauerstoff enthaltenden Gasen als Radikalfänger in der Gasphase und in der Flüssigphase des reagierenden Systems während der Umsetzung in Mengen von 1 mg bis 30 mg O₂ pro Minute pro Doppelbindungsäquivalent im eingesetzten Olefin im eingesetzten Luft- oder Sauerstoffstrom oder von 5 bis 500 ppm Sauerstoff in der Reaktionsapparatur.

2. Verfahren zur Herstellung von Polyalkenylbernsteinsäure-Derivaten nach Anspruch 1, dadurch gekennzeichnet, daß man die Oligo- oder Polyolefine vor Umsetzungsbeginn mit Sauerstoff oder Sauerstoff enthaltenden Gasen behandelt.

3. Verfahren zur Herstellung von Polyalkenylbernsteinsäure-Derivaten nach Anspruch 1 oder 2, bei dem als Oligo- oder Polyolefine Oligo- bzw. Polymerisate von C₃- bis C₁₂-Olefinen oder Copolymerisate von C₃- bis C₁₂-Olefinen untereinander oder mit Ethylen eingesetzt werden.

4. Verfahren zur Herstellung von Polyalkenylbernsteinsäureanhydriden aus Oligo- oder Polyolefinen und Maleinsäureanhydrid nach den Ansprüchen 1 bis 3.

5. Verwendung von Polyalkenylbernsteinsäure-Derivaten, hergestellt durch Umsetzung von Oligo- oder Polyolefinen mit einem zahlengemittelten Molekulargewicht (M_{N}) von 500 bis 5000 mit Maleinsäurederivaten der allgemeinen Formel I 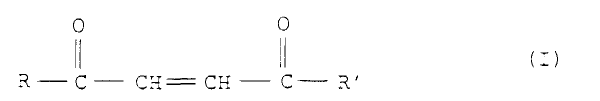 in der R und R' unabhängig voneinander für Hydroxyl, C₁- bis C₄- Alkyl oder Halogenatome oder zusammen für ein Sauerstoffatom stehen, gemäß den Ansprüchen 1 bis 4,
nach zusätzlicher Imidierung, Amidierung oder Veresterung als Kraft- und Schmierstoffadditive.

6. Kraftstoffe für Ottomotoren, enthaltend 10 bis 1000 ppm an gemäß den Ansprüchen 1 bis 4 hergestellten Polyalkenylbernsteinsäure-Derivaten nach zusätzlicher Imidierung, Amidierung oder Veresterung.

7. Schmierstoffe, enthaltend 0,1 bis 10 Gaw.-% an gemäß den Ansprüchen 1 bis 4 hergestellten Polyalkenylbernsteinsäure-Derivaten nach zusätzlicher Imidierung, Amidierung oder Veresterung.

8. Aschefreie Dispergatoren, erhältlich durch Cokondensation von
(i) Polyalkenylbernsteinsäure-Derivaten aus Oligo- oder Polyolefinen mit einem zahlengemittelten Molekulargewicht (M_{N}) von 500 bis 5000 und Maleinsäurederivaten der allgemeinen Formel I 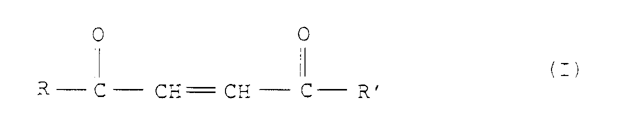 in der R und R' unabhängig voneinander für Hydroxyl, C₁- bis C₄- Alkyl oder Halogenatome oder zusammen für ein Sauerstoffatom stehen, hergestellt gemäß den Ansprüchen 1 bis 4, mit
(ii) Polycarbonsäuren oder Polycarbonsäureanhydriden aus der Gruppe niedermolekulare Di-, Tri- und Tetracarbonsäuren aliphatischer oder aromatischer Struktur, welche zusätzlich funktionelle Gruppen tragen können, und polymere Carbonsäure mit Ausnahme von Copolymerisaten von Maleinsäure oder Maleinsäurederivaten mit Olefinen sowie die zugehörigen Anhydride und
(iii) Polyaminen,
wobei die Mengen der Komponenten (ii) und (iii) so gewählt werden, daß mindetens 5 mol-% der Polyalkenylbernsteinsäure-Derivate als Imid- oder Amidstrukturen mit (ii) und (iii) vorliegen.

9. Kammpolymere, erhältlich durch Cokondensation bei Temperaturen von 120 bis 200°C von
(α) Polyalkenylbernsteinsäure-Derivaten aus Oligo- oder Polyolefinen mit einem zahlengemittelten Molekulargewicht (M_{N}) von 500 bis 5000 und Maleinsäure-Derivaten der allgemeinen Formel I 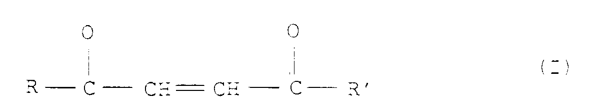 in der R und R' unabhängig voneinander für Hydroxyl, C₁- bis C₄- Alkyl oder Halogenatome oder zusammen für ein Sauerstoffatom stehen, hergestellt gemäß den Ansprüchen 1 bis 4, mit
(β) Polycarbonsäuren oder Polycarbonsäureanhydriden auf Basis von Copolymerisaten von Maleinsäure oder Maleinsäurederivaten mit Olefinen und
(γ) Dolyaminen,
wobei die Mengen der Komponenten (β) und (γ) so gewählt werden, daß mindestens 5 mol-% der Polyalkenylbernsteinsäure-Derivate als Imid- oder Amidstrukturen mit (β) und (γ) vorliegen.

10. Verwendung von Kammpolymeren gemäß Anspruch 9 als aschefreie Dispergatoren in Kraft- und Schmierstoffen.

## Claims

1. A process for the preparation of polyalkenylsuccinic acid derivatives by reacting oligo- or polyolefins having a number average molecular weight (M_{N}) of from 500 to 5000 with maleic acid derivatives of the formula I 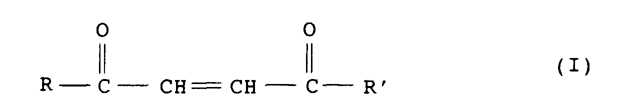 where R and R', independently of one another, are each hydroxyl, C₁-C₄-alkyl or halogen or together are oxygen, at from 140 to 250°C, wherein oxygen or an oxygen-containing gas is present as free radical acceptor in the gas phase and in the liquid phase of the reacting system during the reaction in amounts of from 1 mg to 30 mg of O₂ per minute per double bond equivalent in the olefin used in the stream of air or oxygen used or of from 5 to 500 ppm of oxygen in the reaction apparatus.

2. A process for the prepration of polyalkenylsuccinic acid derivatives as claimed in claim 1, wherein the oligo- or polyolefins are treated with oxygen or an oxygen-containing gas before the beginning of the reaction.

3. A process for the preparation of polyalkenylsuccinic acid derivatives as claimed in claim 1 or 2, in which the oligo- or polyolefins used are oligo- or polymers of C₃-C₁₂-olefins or copolymers of C₃-C₁₂-olefins with one another or with ethylene.

4. A process for the preparation of polyalkenylsuccinic acid anhydrides from oligo- or polyolefins and maleic anhydride as claimed in any of claims 1 to 3.

5. The use of polyalkenylsuccinic acid derivatives prepared by reacting oligo- or polyolefins having a number average molecular weight (M_{N}) of from 500 to 5000 with maleic acid derivatives of the formula I 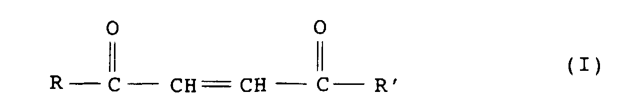 where R and R', independently of one another, are each hydroxyl, C₁-C₄-alkyl or halogen or together are oxygen, as claimed in any of claims 1 to 4,
after additional imidation, amidation or esterification, as fuel and lubricant additives.

6. A fuel for gasoline engines, containing from 10 to 1000 ppm of polyalkenylsuccinic acid derivatives prepared as claimed in any of claims 1 to 4, after additional imidation, amidation or esterification.

7. A lubricant containing from 0.1 to 10% by weight of polyalkenylsuccinic acid derivatives prepared as claimed in any of claims 1 to 4, after additional imidation, amidation or esterification.

8. An ashless dispersant obtainable by cocondensation of
(i) polyalkenylsuccinic acid derivatives of oligo- or polyolefins having a number average molecular weight (M_{N}) of from 500 to 5000 and maleic acid derivatives of the formula I 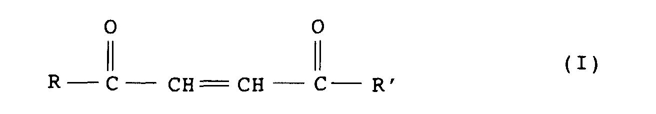 where R and R', independently of one another, are each hydroxyl, C₁-C₄-alkyl or halogen or together are oxygen, prepared as claimed in any of claims 1 to 4, with
(ii) polycarboxylic acids or polycarboxylic annydrides selected from the group consisting of low molecular weight aliphatic or aromatic di-, tri- and tetracarboxylic acids which may additionally carry functional groups and polymeric carboxylic acids, with the exception of copolymers of maleic acid or maleic acid derivatives with olefins, and the associated anhydrides and
(iii) polyamines,
the amounts of the components (ii) and (iii) being chosen so that at least 5 mol% of the polyalkenylsuccinic acid derivatives are present as imide or amide structures with (ii) and (iii).

9. A comb polymer obtainable by cocondensation at from 120 to 200°C of
(α) polyalkenylsuccinic acid derivatives comprising oligo- or polyolefins having a number average molecular weight (M_{N}) of from 500 to 5000 and maleic acid derivatives of the formula I 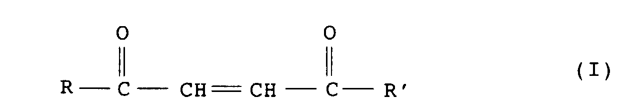 where R and R', independently of one another, are each hydroxyl, C₁-C₄-alkyl or halogen or together are oxygen, prepared as claimed in any of claims 1 to 4, with
(β) polycarboxylic acids or polycarboxylic anhydrides based on copolymers of maleic acid or maleic acid derivatives with olefins, and
(γ) polyamines,
the amounts of the components (β) and (γ) being chosen so that at least 5 mol% of the polyalkenylsuccinic acid derivatives are present as imide or amide structures with (β) and (γ).

10. The use of a comb polymer as claimed in claim 9 as an ashless dispersant in fuels and lubricants.

## Revendications

1. Procédé de préparation de dérivés de l'acide polyalcénylsuccinique par réaction d'oligo- et de polyoléfines ayant une masse moléculaire moyenne en nombre (M_{N}) de 500-5000 avec des dérivés d'acide maléique de formule générale I 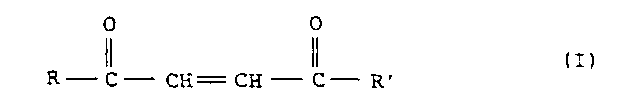 dans laquelle R et R' représentent indépendamment l'un de l'autre un groupement hydroxyle, un groupement alkyle en C₁-C₄ ou un atome d'halogène ou bien ensemble un atome d'oxygène, à des températures de 140-250°C, caractérisé par la présence d'oxygène ou de gaz contenant de l'oxygène en tant que piégeur de radicaux dans la phase gazeuse et dans la phase liquide du système réagissant pendant la réaction, en des quantités de 1-30 mg d'O₂ par minute et par équivalent de double liaison dans l'oléfine utilisée dans le courant d'air ou d'oxygène utilisé ou de 5-500 ppm d'oxygène dans l'appareillage de réaction.

2. Procédé de préparation de dérivés de l'acide polyalcénylsuccinique selon la revendication 1, caractérisé en ce que l'on traite les oligo- ou polyoléfines avant le commencement de la réaction avec de l'oxygène ou des gaz contenant de l'oxygène.

3. Procédé de préparation de dérivés de l'acide polyalcénylsuccinique selon la revendication 1 ou 2, dans lequel on utilise, en tant qu'oligo- ou polyoléfine, des oligo- ou des polymères d'oléfines en C₃-C₁₂ ou des copolymères d'oléfine en C₃-C₁₂ entre elles ou avec de l'éthylène.

4. Procédé de préparation d'anhydrides d'acide polyalcénylsuccinique à partir d'oligo- ou de polyoléfines et d'anhydride d'acide maléique selon l'une quelconque des revendications 1 à 3.

5. Utilisation de dérivés de l'acide polyalcénylsuccinique préparés par réaction d'oligo- ou de polyoléfines ayant une masse moléculaire moyenne en nombre (M_{N}) de 500-5000 avec des dérivés d'acide maléique de formule générale I 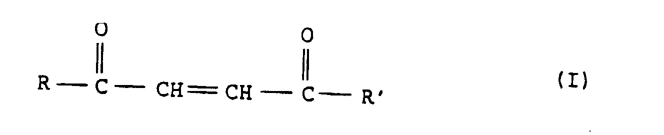 dans laquelle R et R' représentent indépendamment l'un de l'autre un groupement hydroxyle, un groupement alkyle en C₁-C₄ ou un atome d'halogène ou bien ensemble un atome d'oxygène, selon l'une quelconque des revendications 1 à 4,
après une imidation, une amidation ou une estérification supplémentaire, en tant qu'additif pour lubrifiant et carburant.

6. Carburants pour automobiles, contenant 10-1000 ppm de dérivés d'acide polyalcénylsuccinique produits selon l'une quelconque des revendications 1 à 4, après une imidation, une amidation ou une estérification supplémentaire.

7. Lubrifiant contenant 0,1-10% en poids de dérivés d'acide polyalcénylsuccinique produits selon l'une quelconque des revendications 1 à 4, après une imidation, une amidation ou une estérification supplémentaire.

8. Agents dispersants dépourvus de cendres pouvant être obtenus par co-condensation de
(i) dérivés d'acide polyalcénylsuccinique à base d'oligo- ou de polyoléfines ayant une masse moléculaire moyenne en nombre (M_{N}) de 500-5000 avec des dérivés d'acide maléique de formule générale I 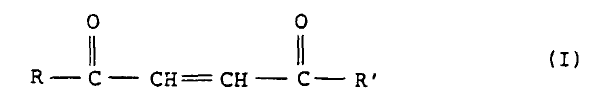 dans laquelle R et R' représentent indépendamment l'un de l'autre un groupement hydroxyle, un groupement alkyle en C₁-C₄ ou un atome d'halogène ou bien ensemble un atome d'oxygène, préparés selon l'une quelconque des revendications 1 à 4, avec
(ii) des acides polycarboxyliques ou des anhydrides polycarboxyliques du groupe des acides à bas poids moléculaire di-, tri- et tétracarboxyliques de structure aliphatique ou aromatique, pouvant porter des groupements fonctionnels supplémentaires, et des acides carboxyliques polymères à l'exception des copolymères de l'acide maléique ou des dérivés de l'acide maléique avec des oléfines ainsi que les anhydrides correspondants, et
(iii) des polyamines,
où les quantités des composants (ii) et (iii) sont choisies de telle sorte qu'au moins 5% en moles du dérivé d'acide polyalcénylsuccinique soit présent sous forme de structure imide ou amide avec (ii) et (iii).

9. Polymère en peigne pouvant être obtenu par co-condensation à des températures de 120-200°C
(α) de dérivés d'acide polyalcénylsuccinique à base d'oligo- ou de polyoléfines ayant une masse moléculaire moyenne en nombre (M_{N}) de 500-5000 avec des dérivés d'acide maléique de formule générale I 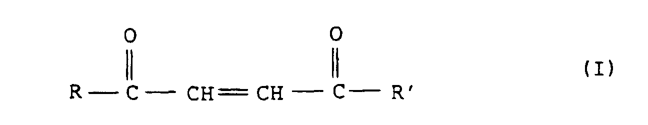 dans laquelle R et R' représentent indépendamment l'un de l'autre un groupement hydroxyle, un groupement alkyle en C₁-C₄ ou un atome d'halogène ou bien ensemble un atome d'oxygène, préparés selon l'une quelconque des revendications 1 à 4, avec
(β) des acides polycarboxyliques ou des anhydrides polycarboxyliques à base de copolymères de l'acide maléique ou de dérivés de l'acide maléique avec des oléfines, et
(γ) des polyamines,
où les quantités des composants (β) et (γ) sont choisies de telle sorte qu'au moins 5% en moles du dérivé d'acide polyalcénylsuccinique soit présent sous forme de structure imide ou amide avec (β) et (γ).

10. Utilisation de polymères en peigne selon la revendication 9 en tant qu'agent dispersant exempt de cendres dans des carburants et lubrifiants.
